# EUROPEAN PATENT APPLICATION

(11) **EP 4 707 350 A1**
(43) Date of publication of application: **11.03.2026**
(21) Application number: 25198874.7
(22) Date of filing: 28.08.2025
(51) Int. Cl.: C09D 11/54, C09D 11/38, C09D 11/03, C09D 11/40, C09D 11/328, C09D 11/037, D06P 5/30

(54) **TREATMENT LIQUID COMPOSITION FOR DYE PRINTING, INK SET, AND RECORDING METHOD**

(30) Priority: 30.08.2024 JP 2024148095
(71) Applicant: Seiko Epson Corporation, Tokyo 160-8801 (JP)
(72) Inventor: WAKUSHIMA, Yuki, 20092 Cinisello Balsamo (IT); MARELLI, Angelo, 22079 Villa Guardia (CO) (IT); ZAROLI, Ugo, 22079 Villa Guardia (CO) (IT); TIBILETTI, Francesco, 22079 Villa Guardia (CO) (IT); FEOLA, Nicola, 22079 Villa Guardia (CO) (IT); MIYAJIMA, Yoshitaka, Suwa-shi, 392-8502 (JP)
(74) Representative: Lewis Silkin LLP

(57) **Abstract**

Provided is a treatment liquid composition for dye printing, the treatment liquid composition containing ε-caprolactam and a dyeing assistant containing one or more selected from benzenesulfonate, sodium sulfate, sodium carbonate, and sodium hydrogen carbonate, in which a pH is 4.0 to 12.

## Description

The present application is based on, and claims priority from JP Application Serial Number 2024-148095, filed August 30, 2024, the disclosure of which is hereby incorporated by reference herein in its entirety.

### BACKGROUND

### 1. Technical Field

The present disclosure relates to a treatment liquid composition for dye printing, an ink set, and a recording method.

### 2. Related Art

Ink jet recording methods can record high-definition images with a relatively simple apparatus and are rapidly developed in various fields. For example, JP-A-2024-25269 discloses an aqueous functional ink for ink jet textile printing, which is used in combination with a recording ink containing a reactive dye and contains a moisturizer and an alkaline agent, and in which a content of a sizing agent is 0% by mass or more and 1% by mass or less, and a potential of hydrogen (pH) is 10 or less, with an object of providing a functional ink for ink jet textile printing which is able to improve durability of an ink jet head and ensure a color developing property of a recording ink.

In a textile printing technology, a pretreatment is performed on a recording medium such as a fabric to prevent a recording ink from bleeding and to improve a fixing property of the ink that has landed on the recording medium. In such a pretreatment liquid, urea is used from the viewpoint of improving the fixing property and a color developing property, but a waste liquid containing urea is generated when washing a printed matter, and thus environmental adaptability is concerned.

### SUMMARY

A treatment liquid composition for dye printing of the present disclosure contains ε-caprolactam and a dyeing assistant containing one or more selected from benzenesulfonate, sodium sulfate, sodium carbonate, and sodium hydrogen carbonate, in which a pH is 4.0 to 12.

An ink set of the present disclosure includes a textile printing ink containing a reactive dye and water, and the treatment liquid composition for dye printing.

A recording method of the present disclosure includes a treatment liquid attachment step of attaching the above-described treatment liquid composition for dye printing to a fabric, and an ink attachment step of attaching a textile printing ink containing a reactive dye and water to the fabric.

### BRIEF DESCRIPTION OF THE DRAWINGS

FIG. 1 is a view illustrating an example of a recording apparatus used in a recording method of the present embodiment.

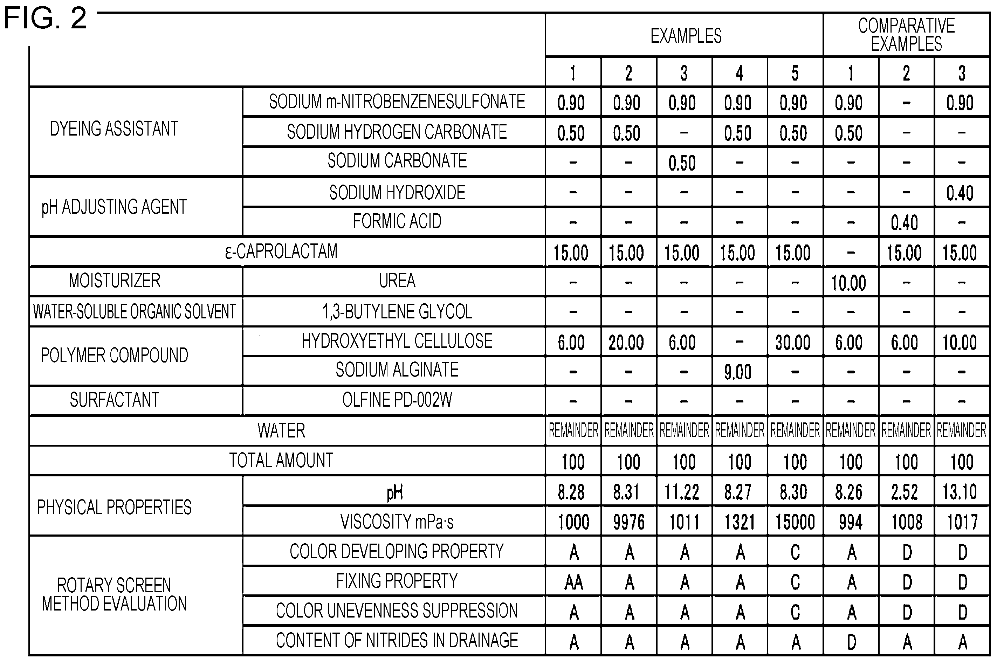

FIG. 2 is a table illustrating examples and comparative examples according to a rotary screen method.

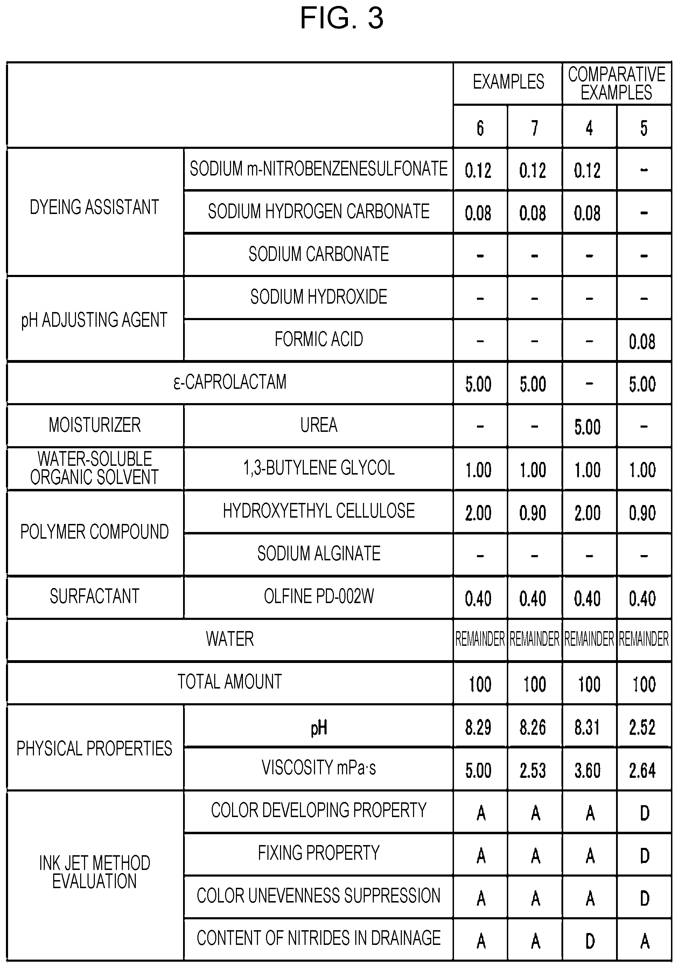

FIG. 3 is a table illustrating examples and comparative examples according to an ink jet method.

### DESCRIPTION OF EMBODIMENTS

Hereinafter, an embodiment of the present disclosure (hereinafter referred to as "the present embodiment") is described in detail with reference to the drawings but the present disclosure is not limited thereto and can be variously modified without deviating from the scope of the present disclosure as described in the claims. In the drawings, the same components are designated by the same reference numerals and the same description will be omitted. A positional relationship, such as left, right, top, and bottom, should be based on a positional relationship illustrated in the drawings unless otherwise particularly specified. Furthermore, dimensional ratios in the drawings are not limited to ratios illustrated in the drawings.

### 1. Treatment Liquid Composition for Dye Printing

A treatment liquid composition for dye printing according to the present embodiment (hereinafter, also simply referred to as "treatment liquid composition") contains ε-caprolactam and one or more selected from a benzenesulfonate, sodium sulfate, sodium carbonate, and sodium hydrogen carbonate as a dyeing assistant, and has a pH of 4 to 12.

In dye printing, a treatment liquid composition is applied to a fabric before printing to enhance a color developing property of a textile printing ink. In such a treatment liquid composition, urea is used in expectation of an effect of dissolving a dye and fixing the dye to the fabric, an effect of equalizing a temperature in a steaming step, and the like. However, when the treatment liquid composition containing urea is used, a large amount of waste liquid containing a nitrogen source such as urea is generated in washing of a printed matter after printing, and environmental adaptability is concerned.

On the other hand, in the treatment liquid composition of the present embodiment, ε-caprolactam and a predetermined dyeing assistant are used. As a result, a fixing property and a color developing property of a textile printing ink can be improved, suppression of color unevenness can be achieved due to equalization of a temperature in a steaming step, and a textile printing method in which a nitrogen discharge amount is small and the environmental adaptability is excellent can be provided.

The treatment liquid composition of the present embodiment may be used in combination with an ink jet textile printing ink or may be used in combination with a rotary textile printing ink, and a dye contained in the textile printing ink is not particularly limited. Among these, it is preferable that the treatment liquid composition of the present embodiment is used in combination with a textile printing ink containing a reactive dye and water. By using the treatment liquid composition in combination with such a textile printing ink, the fixing property and the color developing property tend to be further improved.

Hereinafter, the treatment liquid composition for dye printing, an ink set, a recording method, and the like according to the present embodiment will be described in detail.

### 1.1. ε-Caprolactam

ε-caprolactam has an excellent effect of dissolving a dye and fixing the dye to a fabric, and thus, the use of ε-caprolactam promotes an interaction between the dye and the fabric, and the fixing property and the color developing property are further improved. In addition, by using the ε-caprolactam, color unevenness in a plane can be suppressed. Specifically, formation of a covalent bond or a non-covalent bond between the dye and the fabric is promoted in a steaming step reaction described later, but it is considered that a variation in an in-plane temperature difference in a steaming step can be suppressed and the color unevenness in the plane can be suppressed by using ε-caprolactam.

However, in the treatment liquid composition of the present embodiment, a mechanism for improving the fixing property and the color developing property and a mechanism for suppressing the color unevenness in the plane are not limited to the above.

The content of the ε-caprolactam is preferably 1.0% by mass to 30% by mass with respect to the total amount of the treatment liquid composition, and may be appropriately adjusted according to an application.

Specifically, the content of the ε-caprolactam in the treatment liquid composition used in combination with an ink jet textile printing ink is preferably 1.0% by mass to 20% by mass, more preferably 2.0% by mass to 15% by mass, still more preferably 3.0% by mass to 10% by mass with respect to the total amount of the treatment liquid composition. When the content of the ε-caprolactam is within the above range, in the recording method using the ink jet method, the fixing property and the color developing property tend to be further improved.

The content of the ε-caprolactam in the treatment liquid composition used in combination with an analog textile printing ink such as a rotary screen method is preferably 2.5% by mass to 30% by mass, more preferably 5.0% by mass to 25% by mass, and still more preferably 10% by mass to 20% by mass with respect to the total amount of the treatment liquid composition. When the content of the ε-caprolactam is within the above range, the fixing property and the color developing property tend to be further improved in the analog textile printing.

### 1.2. Dyeing Assistant

The dyeing assistant contains one or more selected from benzenesulfonate, sodium sulfate, sodium carbonate, and sodium hydrogen carbonate. Among these, benzenesulfonate is preferable. In addition, benzenesulfonate is not particularly limited, and examples thereof include nitrobenzenesulfonate, alkylbenzenesulfonate, and the like, in addition to metal salts of benzenesulfonic acid.

Among these, benzenesulfonate is preferable, nitrobenzenesulfonate is preferable, and a meta-nitrobenzenesulfonate is preferable. Metal atoms constituting benzenesulfonate are not particularly limited, and examples thereof include an alkali metal such as sodium and potassium, and alkaline earth metals such as calcium and magnesium. Among these, alkali metal is preferable, and sodium is more preferable.

By using such a dyeing assistant in combination with ε-caprolactam, a first reaction of the dye is further promoted, and the color developing property and the fixing property are further improved, and a printed matter in which color unevenness is further suppressed can be obtained.

The content of the dyeing assistant is preferably 0.01% by mass to 10% by mass with respect to the total amount of the treatment liquid composition, and may be appropriately adjusted according to an application.

Specifically, the content of the dyeing assistant in the treatment liquid composition used in combination with the ink jet textile printing ink is preferably 0.01% by mass to 5.0% by mass, more preferably 0.05% by mass to 2.5% by mass, still more preferably 0.10% by mass to 1.0% by mass, and still more preferably 0.15% by mass to 0.50% by mass with respect to the total amount of the treatment liquid composition. When the content of the dyeing assistant is within the above range, in the recording method using the ink jet method, the fixing property and the color developing property tend to be further improved, and color unevenness tends to be further suppressed.

The content of the dyeing assistant in the treatment liquid composition used in combination with the analog textile printing ink such as the rotary screen method is preferably 0.50% by mass to 10% by mass, more preferably 0.75% by mass to 5% by mass, and still more preferably 1.0% by mass to 2.5% by mass with respect to the total amount of the treatment liquid composition. When the content of the dyeing assistant is within the above range, the fixing property and the color developing property tend to be further improved in the analog textile printing and color unevenness tends to be further suppressed.

Further, a ratio of the content of ε-caprolactam to the content of the dyeing assistant is preferably 2.5 to 50, and may be appropriately adjusted according to an application.

Specifically, in the treatment liquid composition used in combination with the ink jet textile printing ink, a ratio of the content of ε-caprolactam to the content of the dyeing assistant is preferably 7.5 to 50, more preferably 10 to 45, still more preferably 12.5 to 40, and still more preferably 15 to 35. When the ratio is within the above range, in the recording method using the ink jet method, the fixing property and the color developing property tend to be further improved and color unevenness tends to be further suppressed.

In the treatment liquid composition used in combination with the analog textile printing ink such as the rotary screen method, the ratio of the content of ε-caprolactam to the content of the dyeing assistant is preferably 2.5 to 40, 5.0 to 30, or 7.5 to 20. When the ratio is within the above range, the fixing property and the color developing property tend to be further improved in the analog textile printing and color unevenness tends to be further suppressed.

### 1.3. Polymer Compound

The treatment liquid composition of the present embodiment may contain a polymer compound. By containing the polymer compound, the viscosity of the treatment liquid composition tends to be further improved, and occurrence of the color unevenness is suppressed.

With regard to the polymer compound, it is preferable that the polymer compound has an action of improving viscosity under alkaline conditions of pH 7 or more. As a result, the color unevenness tends to be suppressed. Such a polymer compound is not particularly limited, and examples thereof include one or more selected from the group consisting of guar gum, ethoxyguar gum, propoxyguar gum, ethoxypropoxyguar gum, tamarind gum, xanthan gum, carboxyethyl cellulose, carboxymethyl cellulose, ammonium cellulose, hydroxyethyl cellulose, sodium alginate, acrylic polymer, polyethylene glycol, polyacrylamide, acrylamide copolymer, AMPS polymer and copolymer, dextrin, carboxymethyl starch, and carbomer. Among these, hydroxyethyl cellulose and sodium alginate are more preferable.

The content of the polymer compound is preferably 0.1% by mass to 45% by mass with respect to the total amount of the treatment liquid composition, and may be appropriately adjusted according to an application.

Specifically, the content of the polymer compound in the treatment liquid composition used in combination with the ink jet textile printing ink is preferably 0.1% by mass to 25% by mass, 0.3% by mass to 10% by mass, or 0.5% by mass to 5.0% by mass with respect to the total amount of the treatment liquid composition. When the content of the polymer compound is within the above range, the color unevenness tends to be further suppressed in the recording method using the ink jet method.

The content of the polymer compound of the treatment liquid composition used in combination with the analog textile printing ink is preferably 1.0% by mass to 45% by mass, more preferably 2.5% by mass to 35% by mass, and still more preferably 5.0% by mass to 25% by mass with respect to the total amount of the treatment liquid composition. When the content of the polymer compound is within the above range, the color unevenness tends to be further suppressed in the analog textile printing.

### 1.4. pH Adjusting Agent

The treatment liquid composition of the present embodiment may contain a pH adjusting agent. By containing the pH adjusting agent, a reaction efficiency between the fabric and the dye is further improved, the fixing property and the color developing property are further improved, and the color unevenness is also suppressed.

Such a pH adjusting agent is not particularly limited, and examples thereof include one or more selected from the group consisting of triethanolamine, 2-amino-2-methyl-1-propanol, 2-amino-2-methyl-1,3-propanediol, sodium hydrogen carbonate, sodium carbonate, potassium carbonate, potassium hydrogen carbonate, sodium hydroxide, potassium hydroxide, triisopropanolamine, sodium citrate, disodium citrate, trisodium citrate, monosodium succinate, disodium succinate, sodium acetate, sodium lactate, sodium dihydrogen phosphate, potassium dihydrogen phosphate, trisodium phosphate, tripotassium phosphate, sodium gluconate, potassium gluconate, sodium tartrate, sodium hydrogen tartrate, potassium hydrogen tartrate, sodium fumarate, sodium malate, dipotassium hydrogen malate, disodium hydrogen malate, sodium dihydrogen pyrophosphate, citric acid, ammonium phosphate, ammonium sulfate, boric acid, lactic acid, boronic acid, maleic acid, malic acid, polyacrylic acid, tartaric acid, ammonium tartrate, ammonium lactate, acetic acid, ammonium acetate, ammonium nitrate, oxalic acid, ammonium oxalate, thiosulfuric acid, ammonium thiosulfate, and formic acid.

Sodium sulfate, sodium carbonate, and sodium hydrogen carbonate exemplified as the dyeing assistant also function as the pH adjusting agent. For example, when the treatment liquid composition contains sodium sulfate, the treatment liquid composition can be regarded as containing both the dyeing assistant and the pH adjusting agent. In addition, when sodium sulfate is contained in 1% by mass, the treatment liquid composition can be regarded as containing 1% by mass of both the dyeing assistant and the pH adjusting agent, respectively.

The content of the pH adjusting agent is preferably 0.01% by mass to 3.0% by mass with respect to the total amount of the treatment liquid composition, and may be appropriately adjusted according to an application.

Specifically, the content of the pH adjusting agent in the treatment liquid composition used in combination with the ink jet textile printing ink is preferably 0.01% by mass to 2.0% by mass, 0.03% by mass to 1.0% by mass, and 0.05% by mass to 0.5% by mass with respect to the total amount of the treatment liquid composition. When the content of the pH adjusting agent is within the above range, in the recording method using the ink jet method, the fixing property and the color developing property tend to be further improved.

The content of the pH adjusting agent in the treatment liquid composition used in combination with the analog textile printing ink is preferably 0.10% by mass to 3.0% by mass, more preferably 0.20% by mass to 2.0% by mass, still more preferably 0.30% by mass to 1.5% by mass with respect to the total amount of the treatment liquid composition. When the content of the pH adjusting agent is within the above range, the fixing property and the color developing property tend to be further improved in the analog textile printing.

### 1.5. pH

When the pH is too high or too low, the reaction efficiency between a fabric and a dye may be lowered. Therefore, in the treatment liquid composition of the present embodiment in which ε-caprolactam and a dyeing assistant are used in combination, the pH is 4.0 to 12, preferably 5.0 to 11.5, 6.0 to 11, 7.0 to 10.5, 7.5 to 10, or 8.0 to 9.5. Since the pH is 12 or less, the reaction efficiency between the fabric and the dye tends to be further improved, so that the fixing property and the color developing property are further improved, and the color unevenness also tends to be suppressed. Since the pH is 4.0 or more, handleability is excellent, and a damage to the fabric or the like due to the acid tends to be reduced.

### 1.6. Viscosity

The viscosity of the treatment liquid composition is 2.0 mPa·s or more and 20,000 mPa·s or less, and may be appropriately adjusted according to an application. Note that in the present specification, the viscosity refers to a value measured under conditions of a temperature of 20°C, a rotational speed of 20 rpm, and 60 seconds by using a Brookfield viscometer.

Specifically, the viscosity of the pretreatment liquid composition used in combination with the ink jet textile printing ink is preferably 2.0 mPa·s or more and 100 mPa·s or less, more preferably 2.1 mPa·s or more and 50 mPa·s or less, and still more preferably 2.2 mPa·s or more and 25 mPa·s or less. When the viscosity is 2.0 mPa·s or more, the fixing property and the color developing property tend to be further improved, and bleeding tends to be suppressed. In addition, when the viscosity is 100 mPa·s or less, ejection stability of the treatment liquid composition in the ink jet method tends to be further improved.

In addition, the viscosity of the pretreatment liquid composition used in combination with the analog textile printing ink is preferably 250 mPa·s or more and 20,000 mPa·s or less, more preferably 500 mPa·s or more and 10,000 mPa·s or less, and still more preferably 750 mPa·s or more and 5,000 mPa·s or less. When the viscosity is 250 mPa·s or more, the fixing property and the color developing property tend to be further improved, and the bleeding tends to be suppressed. In addition, when the viscosity is 20,000 mPa·s or less, coatability of the treatment liquid composition in the analog textile printing tends to be further improved.

### 1.7. Urea

In the treatment liquid composition for dye printing, urea may contribute to an improvement of the fixing property and the color developing property of the printing ink, but it is necessary to use a large amount of water when removing urea from a printed matter, and thus there is a problem in environmental adaptability such as a waste water treatment.

The treatment liquid composition of the present embodiment contains the above-mentioned ε-caprolactam and the dyeing assistant as a substitute for such urea. Therefore, the content of urea is preferably 50 g/kg or less, more preferably 40 g/kg or less, still more preferably 30 g/kg or less, still more preferably 20 g/kg or less, still more preferably 10 g/kg or less, and still more preferably 5 g/kg or less with respect to the total amount of the treatment liquid composition, and it is preferable that urea is not contained. When the content of urea is 50 g/kg or less, the amount of water used at the time of draining can be reduced, and the environmental adaptability tends to be further improved.

### 1.8. Water-Soluble Organic Solvent

The treatment liquid composition preferably contains a water-soluble organic solvent. Examples of the water-soluble organic solvent include glycol-based solvents, glycol monoether-based solvents, compounds containing three hydroxyl groups such as glycerin, nitrogen-containing solvents, alcohol-based solvents, and the like. From the viewpoint of improving permeability and the color developing property, it is preferable to include a glycol-based solvent among the water-soluble organic solvents. The water-soluble organic solvents may be used alone or in combination of two or more types.

Specific examples of the glycol-based solvent include 1,3-butylene glycol, ethylene glycol, diethylene glycol, triethylene glycol, propylene glycol, dipropylene glycol, 1,3-propane diol, 1,2-butanediol, 1,2-pentanediol, 1,2-hexanediol, 1,4-butanediol, 1,5-pentanediol, 1,6-hexanediol, and the like. From the viewpoint of more effectively and reliably achieving the effect of the present disclosure, 1,3-butylene glycol is preferable.

The content of the glycol-based solvent is preferably 0.1% by mass to 5.0% by mass, more preferably 0.5% by mass to 3.0% by mass, and still more preferably 0.7% by mass to 2.0% by mass with respect to the total amount of the treatment liquid composition. When the content of the glycol-based solvent is within the above range, the effect of the present disclosure is further effectively and reliably exhibited.

Examples of solvents other than the glycol-based solvent include ethylene glycol monomethyl ether, ethylene glycol monoethyl ether, triethylene glycol monobutyl ether, and the like as glycol monoether-based solvents, 2-pyrrolidone, N-methyl-2-pyrrolidone, N-ethyl-2-pyrrolidone, and the like as nitrogen-containing solvents, and methanol, ethanol, n-propyl alcohol, iso-propyl alcohol, n-butanol, 2-butanol, tert-butanol, iso-butanol, n-pentanol, and the like as alcohol-based solvents.

The content of the water-soluble organic solvent is preferably 0.1% by mass to 5.0% by mass, 0.5% by mass to 3.0% by mass, or 0.7% by mass to 2.0% by mass with respect to the total amount of the treatment liquid composition. When the content of the water-soluble organic solvent is within the above range, the effect of the present disclosure can be further effectively and reliably exhibited.

### 1.9. Surfactant

The treatment liquid composition may further contain a surfactant. Examples of the surfactant include an acetylene glycol-based surfactant, a fluorine-based surfactant, and a silicone-based surfactant. The surfactant may be used alone or in combination of two or more types.

From the viewpoint of more effectively and reliably achieving the effect of the present disclosure, the treatment liquid composition preferably contains an acetylene glycol-based surfactant. Examples of acetylene glycol-based surfactants include Olfine (registered trademark) B, Y, P, A, STG, SPC, E1004, E1010, PD-001, PD-002W, PD-003, PD-004, EXP. 4001, EXP. 4036, EXP. 4051, AF-103, AF-104, AK-02, SK-14, and AE-3 (manufactured by Nissin Chemical Industry Co., Ltd.), Surfynol (registered trademark) 104, 104E, 104H, 104A, 104BC, 104DPM, 104PA, 104PG-50, 104S, 420, 440, 465, and 485, and Acetylenol (registered trademark) E00, E00P, E40, and E100 (manufactured by Kawaken Fine Chemicals Co., Ltd.). Among these, from the same viewpoint as described above, it is preferable to use PD-002W.

Examples of the silicone-based surfactant include a polysiloxane-based compound such as a polyether-modified organosiloxane. Examples of commercially available polyether-modified organosiloxane include BYK-306, BYK-307, BYK-333, BYK-341, BYK-345, BYK-346, and BYK-348 (manufactured by BYK Chemie Japan KK), and KF-351A, KF-352A, KF-353, KF-354L, KF-355A, KF-615A, KF-945, KF-640, KF-642, KF-643, KF-6020, X-22-4515, KF-6011, KF-6012, KF-6015, and KF-6017 (manufactured by Shin-Etsu Chemical Co., Ltd.).

Examples of the fluorine-based surfactant include a fluorine-modified polymer, and examples thereof include BYK-340 (manufactured by BYK Chemie Japan KK).

The content of the surfactant is preferably 0.01% by mass to 1.5% by mass, more preferably 0.05% by mass to 1.0% by mass, and still more preferably 0.10% by mass to 0.75% by mass with respect to the total amount of the treatment liquid composition. When the content of the surfactant is within the above range, the effect of the present disclosure can be further effectively and reliably exhibited.

### 1.10 Water

The treatment liquid composition includes water. Examples of the water include ion-exchanged water, ultrafiltration water, reverse osmosis water, pure water such as distilled water, and ultrapure water.

The content of water is preferably 60% by mass to 98% by mass with respect to the total amount of the treatment liquid composition, and may be appropriately adjusted according to an application.

Specifically, the content of water in the treatment liquid composition used in combination with the ink jet textile printing ink is preferably 70% by mass to 98% by mass, more preferably 80% by mass to 96% by mass, and still more preferably 85% by mass to 94% by mass with respect to the total amount of the treatment liquid composition. When the content of water is within the above range, ejection stability of the treatment liquid composition in the ink jet method tends to be further improved.

The content of water in the treatment liquid composition used in combination with the analog textile printing ink is preferably 60% by mass to 95% by mass, more preferably 65% by mass to 90% by mass, and still more preferably 70% by mass to 85% by mass with respect to the total amount of the treatment liquid composition. When the content of water is within the above range, the coatability of the treatment liquid composition in the analog textile printing tends to be further improved.

### 1.11 Dye

The treatment liquid composition may not contain a dye, or may contain a dye. When the treatment liquid composition contains the dye, the fabric can be colored by using the treatment liquid composition in the analog textile printing method. In particular, when liquid flow dyeing is performed as the analog textile printing method, it is preferable that the treatment liquid composition contains the coloring material.

On the other hand, in analog textile printing other than the liquid flow dyeing and in digital textile printing such as an ink jet method, the treatment liquid composition is not used for the purpose of coloring, but is used to improve the fixing property of the textile printing ink, and in that respect, the treatment liquid composition is at least distinguished from the textile printing ink. That is, it is preferable that the treatment liquid composition substantially does not contain the dye. In the present embodiment, "not contain a dye" also means "not substantially contain dye". More specifically, a state in which the dye is substantially not contained means that the content of the coloring material is preferably 0.1% by mass or less, 0.05% by mass or less, or 0.01% by mass or less with respect to the total amount of the treatment liquid composition. A lower limit of the content of the coloring material is not particularly limited, but is 0% by mass.

In addition, when the treatment liquid composition contains the coloring material in an application such as liquid flow dyeing, the dye is preferably a dye having a triazine skeleton, a phthalocyanine skeleton, or a vinyl sulfone skeleton. Specifically, examples of the dyes to be described later include C.I. reactive black 39 having the triazine skeleton, C.I. reactive cyan 15 having the phthalocyanine skeleton, and other reactive black, navy, cyan, blue, and brown dyes having these skeletons.

### 1.12. Other Components

The treatment liquid composition may further contain components other than those described above as necessary. Such a component is not particularly limited, and examples thereof include a dissolution aid, a viscosity modifier, an antioxidant, a preservative, an antifungal agent, a corrosion inhibitor, a chelating agent and other additives for capturing metal ions that affect dispersion, and a solvent other than the above-mentioned solvent.

The treatment liquid composition of the present embodiment can be prepared by a known method. For example, the treatment liquid composition can be prepared by mixing each component in any order and removing impurities, foreign matter, and the like by performing filtration or the like as necessary. As a method of mixing each of the components, for example, a method of sequentially adding each component into a tank equipped with a stirring device such as a mechanical stirrer or a magnetic stirrer, and performing stirring and mixing is used. Examples of the filtration method include centrifugal filtration and filter filtration.

### 1.13. Recording Medium

The recording medium used in the present embodiment is not particularly limited, and may be a fabric, and examples of fibers constituting the fabric include natural fibers such as cellulose, cotton, linen, silk, and wool, regenerated fibers such as viscose, rayon, and cupra, or a blended fabric of these natural fibers and regenerated fibers, a blended fabric of artificial fibers such as polyester fibers and polyamide fibers, and the like.

Among these, the treatment liquid composition of the present embodiment is preferably used in a state of being attached to a fabric including one or more fibers selected from the group consisting of cellulose, viscose, and linen. By using such a recording medium, the fixing property and the color developing property tend to be further improved, and color unevenness tends to be suppressed.

### 2. Ink Set

The ink set of the present embodiment contains the above-mentioned treatment liquid composition for dye printing, and the textile printing ink containing a reactive dye and water. As described above, the treatment liquid composition of the present embodiment is preferably used in combination with the textile printing ink containing a reactive dye. By using such an ink set, the fixing property and the color developing property are further improved and the color unevenness is suppressed. In the present embodiment, one recording apparatus may be mounted with both the treatment liquid composition and the textile printing ink that is a reactive dye.

Examples of the reactive dye included in the textile printing ink include C. I. Reactive Yellow 2, 3, 6, 12, 18, 86, 95; C. I. Reactive Orange 2, 5, 12, 13, 20, 35, 99; C. I. Reactive Red 3, 4, 7, 12, 13, 15, 16, 24, 29, 31, 32, 33, 43, 45, 46, 58, 59; C. I. Reactive Violet 1, 2, 33; C. I. Reactive Blue 2, 3, 5, 7, 13, 14, 15, 19, 25, 26, 39, 40, 41, 46, 49, 72, 176, 198; C. I. Reactive Green 5, 8; C. I. Reactive Brown 1, 2, 7, 8, 9, 11, 14; C. I. Reactive Black 1, 2, 3, 5, 8, 10, 12, 13, 39, and the like. Note that in the present specification, the reactive dye refers to a compound classified as a reactive dye in the Color Index.

Note that in the present embodiment, the fabric to which the treatment liquid composition is attached by the ink jet method may be dried and the printing ink may be applied by the ink jet method, or the fabric to which the treatment liquid composition is attached by the analog textile printing such as a rotary screen method may be dried, and the printing ink may be applied by the ink jet method. Alternatively, the printing ink may be applied by the ink jet method to the fabric soaked in the treatment liquid composition and dried. As described above, when the treatment liquid composition is attached and then dried, the viscosity of the treatment liquid composition and the viscosity of the printing ink do not need to match.

The ink that is used is not limited to the ink jet textile printing ink, and may be combined with an ink for analog textile printing such as a rotary screen method.

### 3. Recording method

The recording method of the present embodiment includes a treatment liquid attachment step of attaching the treatment liquid composition for dye printing described above to a fabric, and an ink attachment step of attaching a textile printing ink containing a reactive dye and water to the fabric. The ink jet recording method of the present embodiment also preferably includes a treatment liquid attachment step of attaching the treatment liquid composition for dye printing described above to a fabric, and an ink attachment step of attaching an ink jet textile printing ink containing a reactive dye and water to the fabric by the ink jet method.

### 3.1. Treatment Liquid Attachment Step

The treatment liquid attachment step is a step of attaching the treatment liquid composition to the recording medium. A method of attaching the treatment liquid composition to the fabric is not particularly limited, and for example, the fabric may be soaked in or passed through the treatment liquid composition, or the treatment liquid composition may be applied by the ink jet method. It is also preferable to attach the treatment liquid composition to the fabric by any one of a spray processing method, a padding processing method, a screen method, and a kiss roll method. In addition, the fabric may be dried once before the printing ink is attached after the treatment liquid composition is attached.

In the present embodiment, the "ink jet method" refers to a method of ejecting an ink or a treatment liquid from a nozzle in an ink jet head. Examples of such a method include a method of driving a pressure generating unit to eject a composition filled in a pressure generating chamber of the ink jet head from the nozzle, and a method of ejecting the composition by applying thermal energy. The method of applying pressure to the ink in the nozzle is not particularly limited, and examples thereof include a piezo method of ejecting droplets of the ink by using a piezoelectric element and a thermal method of ejecting droplets by heating.

### 3.2. Ink Attachment Step

An ink attachment step is a step of further attaching the textile printing ink on a portion to which the -above described treatment liquid composition is attached. In the ink attachment step, the textile printing ink is also preferably attached by the ink jet method. When the treatment liquid attachment step and the ink attachment step are performed by the ink jet method, the treatment liquid attachment step and the ink attachment step may be performed in the same pass or in different passes. By performing the treatment liquid attachment step and the ink attachment step on the same pass, productivity of a printed matter tends to be further improved.

### 3.3. Steaming Step

In a steaming step, steam is applied to the fabric to which the textile printing ink is attached by a normal pressure steaming method, a high pressure steaming method, or the like. As a result, fixing of the dye to the fabric is promoted. Steaming conditions are not particularly limited, and examples thereof include conditions of 80°C to 150°C for 5 to 20 minutes. Thereafter, a washing step of washing the fabric to remove extra components such as components contained in the treatment liquid composition or the printing ink which are not attached to the fabric, and a drying step of drying the washed printed matter may be performed.

### 4. Ink jet Recording Apparatus

When the treatment liquid composition and the textile printing ink are attached to the recording medium by the ink jet recording apparatus, the ink jet recording apparatus used is not particularly limited, and any of a serial type and a line type can be used.

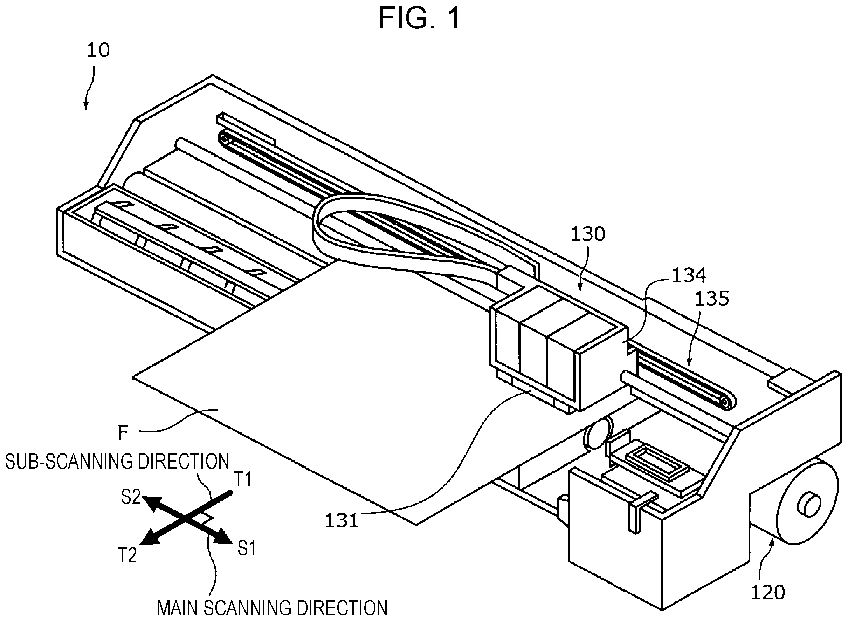

As an example of the ink jet recording apparatus, FIG. 1 shows a perspective view of a serial type recording apparatus. As illustrated in FIG. 1, a serial type recording apparatus 10 includes a transport section 120 and a recording section 130. The transport section 120 transports a recording medium F fed to the serial type recording apparatus to the recording section 130, and discharges the recording medium after recording to the outside of the serial type recording apparatus. Specifically, the transport section 120 includes each feeding roller and transports the fed recording medium F in a sub-scanning direction T1.

In addition, the recording section 130 in the recording apparatus includes a carriage 134 on which an ink jet head 131 including nozzles for ejecting the treatment liquid composition and the textile printing ink onto the recording medium F sent from the transport section 120 is mounted, and a carriage moving mechanism 135 for moving the carriage 134 in main scanning directions S1 and S2 of the recording medium F.

In addition, the recording section 130 in the recording apparatus includes the nozzles for ejecting the treatment liquid composition and the textile printing ink.

In the case of the serial type recording apparatus, a head having a length smaller than a width of a recording medium is provided as the ink jet head 131, the head moves, and recording is performed in a plurality of passes (multi-pass). In the serial type recording apparatus, the head 131 is mounted on the carriage 134 that moves in a predetermined direction, and the head moves with the movement of the carriage to eject the ink onto the recording medium. As a result, attachment is performed in two or more passes (multi-pass). The passes are also referred to as main scanning. Sub-scanning in which the recording medium is transported between the passes is performed. That is, the main scanning and the sub-scanning are alternately performed.

### EXAMPLES

Hereinafter, the present disclosure will be described in more detail with reference to Examples and Comparative Examples. The present disclosure is not limited by following Examples.

### 1. Preparation of Treatment Liquid Composition for Textile Printing

A treatment liquid composition for textile printing of each example was obtained by putting respective components into a tank for a mixture so as to have compositions shown in Tables 1 and 2, mixing and stirring the components, and further filtering the components with a membrane filter. Numerical values of each component shown in each example in the tables represent % by mass unless otherwise stated.

Details of product components used in Tables 1 and 2 are as follows.
Dyeing Assistant
   Sodium m-nitrobenzenesulfonate
   Sodium hydrogen carbonate (also functions as the pH adjusting agent)
   Sodium carbonate (also functions as the pH adjusting agent)
pH Adjusting Agent
   Formic acid
   Sodium hydroxide
ε-Caprolactam
   ε -caprolactam
Moisturizer
   Urea
Water-Soluble Organic Solvent
   1,3-Butylene glycol
Polymer compound
   Hydroxyethyl cellulose
   Sodium alginate
Surfactant

Olfine PD-002W (trade name, acetylene glycol-based surfactant, manufactured by Nisshin Chemical Industry Co., Ltd.)

### 1.1. Method for Measuring Viscosity

A viscosity of the treatment liquid composition prepared as described above was measured under conditions of a temperature of 20°C, a rotational speed of 20 rpm, and 60 seconds by using a BROOKFIELD viscometer.

### 1.2. Method for Measuring pH

A pH of the treatment liquid composition prepared as described above was measured by using a desktop type pH meter (model: F-72, manufacturer: manufactured by HORIBA). Note that the measurement temperature was set to 20°C.

### 2. Recording Method

### 2.1. Recording Method by Rotary Screen Method

The treatment liquid composition was applied to a cotton fabric and was dried. Then, a screen for each color was set in a printer, and printing was performed on the fabric to which the treatment liquid composition was applied. Specifically, the textile printing ink was supplied into the screen, and the printing ink was transferred to the fabric by rotating the screen to pass through the opening of the screen. As a result, a solid pattern was printed.

Thereafter, the fabric to which the ink was attached was treated under conditions of 10 minutes at 102°C by using a high-temperature steamer (manufactured by TSUJII SEISAKU-SHO Co., Ltd., "HT-3-550 type"), and then dried. Then, the components such as an extra dye on the fabric were washed away to obtain a printed matter.

Note that in Examples 1 to 5 and Comparative Examples 1 to 3, a printed matter using Kayacelon Black C-HK (manufactured by Nippon Kayaku Co., Ltd.) containing a reactive dye as the textile printing ink by the rotary screen method was prepared.

### 2. 2. Recording Method Using Ink Jet Method

The treatment liquid composition was applied to a cotton fabric and was dried. Each textile printing ink (GENESTA RE) was set in a Monna Lisa ink jet textile printing machine (Monna Lisa Evo Tre 16-180, manufactured by Seiko Epson Corporation), and a solid pattern was printed on a fabric to which the treatment liquid composition was applied at 900 × 600 dpi.

Thereafter, the fabric to which the ink was attached was treated under conditions of 10 minutes at 102°C by using a high-temperature steamer (manufactured by TSUJII SEISAKU-SHO Co., Ltd., "HT-3-550 type"), and then dried. Then, the components such as an extra dye on the fabric were washed away to obtain a printed matter.

As the ink jet textile printing ink, in Examples 6 to 7 and Comparative Examples 4 to 5, a printed matter using CYAN GENESTA RE 10L (manufactured by Seiko Epson Corporation) containing an acidic dye was prepared.

### 3. Evaluation Method

### 3.1. Color Developing Property

A color difference between a color sample of each ink used for forming the solid pattern and the solid pattern of the printed matter obtained by each of the above methods was measured by using a color measuring instrument i1Pro (manufactured by X-Rite Inc.).

### Evaluation Standards

AA: Color difference (ΔE) is less than 0.4
A: Color difference (ΔE) is 0.4 or more and less than 0.8
B: Color difference (ΔE) is 0.8 or more and less than 1.2
C: Color difference (ΔE) is 1.2 or more and less than 2.0
D: Color difference (ΔE) is 2.0 or more

### 3.2. Fixing Property

An optical density of the solid pattern of the printed matter obtained by each of the above methods was measured by using a color measuring instrument i1Pro (manufactured by X-Rite Inc.). In Examples 1 to 5 and Comparative Examples 1 to 3 performed by the rotary screen method, the fixing property was evaluated based on relative values of optical densities of Examples 1 to 5 and Comparative Examples 1 to 3 when an optical density of Comparative Example 1 was set to 100. In addition, in Examples 6 and 7 and Comparative Examples 4 and 5 performed by the ink jet method, the fixing property was evaluated based on relative values of optical densities of Examples 6 and 7 and Comparative Examples 4 and 5 when an optical density of Comparative Example 4 was set to 100.

### Evaluation Standards

AA: Relative value of optical density is 97 or more
A: Relative value of optical density is 95 or more and less than 97
B: Relative value of optical density is 90 or more and less than 95
C: Relative value of optical density is 85 or more and less than 90
D: Relative value of optical density is less than 85

### 3.3. Suppression of Color Unevenness

In the solid pattern of the printed matter obtained by each of the above methods, the optical density at four vertices of a square having a side length of 10 cm was measured by using a color measuring instrument i1Pro (manufactured by X-Rite, Inc.), and color unevenness was evaluated based on the optical density difference at the four points.

### Evaluation Standards

A: Optical density difference is less than 0.8
B: Optical density difference is 0.8 or more and less than 1.2
C: Optical density difference is 1.2 or more and less than 2.0
D: Optical density difference is 2.0 or more

### 3.4. Content of Nitrides in Drainage

The printed matter, which was obtained as described above, before a washing step was washed with water, and the content of an ammonium salt, the content of nitrate, and the content of other nitrides containing urea in the water after washing were quantified. The content of the ammonium salt was quantified by an indophenol method, which is a method for quantifying the content of the ammonium salt by reacting the ammonium salt with phenol under coexistence of hypochlorite according to JISK0102, and developing a color. In addition, the content of nitrate was quantified by a colorimetric determination method using a reaction of nitrate with sulfosalicylic acid obtained by adding sodium salicylate and sulfuric acid according to JISK0400 and the subsequent color development by an alkali treatment. Furthermore, the content of other nitrides containing urea was quantified by decomposing the sample with peroxysulfate and sulfuric acid, and the subsequent colorimetric determination of nitrate according to the above-mentioned JISK0400.

### Evaluation Standards

A: Total content of nitrides is 250 ppm or less.
D: Total content of nitrides is more than 250 ppm.

### 4. Evaluation Results

Tables 1 and 2 show compositions of the treatment liquids used in each example and the evaluation results. From Tables 1 and 2, it is found that the printed matter obtained by performing recording by using the treatment liquid composition for dye printing containing ε-caprolactam and a dyeing assistant and having a pH of 4.0 to 12 is excellent in the fixing property and the color developing property, the color unevenness is suppressed, and the content of nitrides in drainage can be reduced, so that the amount of water used at the time of draining can also be reduced.

In the above example, examples using cotton as a fabric containing cellulose were shown, but the same evaluation was performed for a linen or a viscose fabric, and the same effect as in the above examples and comparative examples was obtained.

## Claims

1. A treatment liquid composition for dye printing, the treatment liquid composition containing:
ε-caprolactam; and
a dyeing assistant containing one or more selected from benzenesulfonate, sodium sulfate, sodium carbonate, and sodium hydrogen carbonate, wherein
a pH is 4.0 to 12.

2. The treatment liquid composition for dye printing according to claim 1, wherein the treatment liquid composition does not contain a dye.

3. The treatment liquid composition for dye printing according to claim 1, further containing:
a dye, wherein
the dye has a triazine skeleton, a phthalocyanine skeleton, or a vinyl sulfone skeleton.

4. The treatment liquid composition for dye printing according to claim 1, wherein
a ratio of a content of the ε-caprolactam to a content of the dyeing assistant is 2.5 to 50.

5. The treatment liquid composition for dye printing according to claim 1, further containing:
a polymer compound.

6. The treatment liquid composition for dye printing according to claim 5, wherein
the polymer compound is one or more selected from the group consisting of guar gum, ethoxyguar gum, propoxyguar gum, ethoxypropoxyguar gum, tamarind gum, xanthan gum, carboxyethyl cellulose, carboxymethyl cellulose, ammonium cellulose, hydroxyethyl cellulose, sodium alginate, acrylic polymer, polyethylene glycol, polyacrylamide, acrylamide copolymer, AMPS polymer and copolymer, dextrin, carboxymethyl starch, and carbomer.

7. The treatment liquid composition for dye printing according to claim 1, further containing:
a pH adjusting agent.

8. The treatment liquid composition for dye printing according to claim 7, wherein the pH adjusting agent is one or more selected from the group consisting of triethanolamine, 2-amino-2-methyl-1-propanol, 2-amino-2-methyl-1,3-propanediol, sodium hydrogen carbonate, sodium carbonate, potassium carbonate, potassium hydrogen carbonate, sodium hydroxide, potassium hydroxide, triisopropanolamine, sodium citrate, disodium citrate, trisodium citrate, monosodium succinate, disodium succinate, sodium acetate, sodium lactate, sodium dihydrogen phosphate, potassium dihydrogen phosphate, trisodium phosphate, tripotassium phosphate, sodium gluconate, potassium gluconate, sodium tartrate, sodium hydrogen tartrate, potassium hydrogen tartrate, sodium fumarate, sodium malate, dipotassium hydrogen malate, disodium hydrogen malate, sodium dihydrogen pyrophosphate, citric acid, ammonium phosphate, ammonium sulfate, boric acid, lactic acid, boronic acid, maleic acid, malic acid, polyacrylic acid, tartaric acid, ammonium tartrate, ammonium lactate, acetic acid, ammonium acetate, ammonium nitrate, oxalic acid, ammonium oxalate, thiosulfuric acid, ammonium thiosulfate, and formic acid.

9. The treatment liquid composition for dye printing according to claim 1, wherein
a viscosity at 20°C is 2.0 mPa·s or more and 20,000 mPa·s or less.

10. The treatment liquid composition for dye printing according to claim 1, wherein
the dyeing assistant contains benzenesulfonate.

11. The treatment liquid composition for dye printing according to claim 1, wherein the treatment liquid composition is used in a state of being attached to a fabric including one or more fibers selected from the group consisting of cellulose, viscose, and linen.

12. The treatment liquid composition for dye printing according to claim 1, wherein
the treatment liquid composition is used in combination with a textile printing ink containing a reactive dye.

13. An ink set comprising:
a textile printing ink containing a reactive dye and water; and
the treatment liquid composition for dye printing according to claim 1.

14. A recording method comprising:
a treatment liquid attachment step of attaching the treatment liquid composition for dye printing according to claim 1 to a fabric; and
an ink attachment step of attaching a textile printing ink containing a reactive dye and water to the fabric.

15. The recording method according to claim 14, wherein
in the treatment liquid attachment step, the treatment liquid composition for dye printing is attached to the fabric by any one of a spray processing method, a padding processing method, a screen method, and a kiss roll method.
